# EUROPEAN PATENT APPLICATION

(11) **EP 2 530 938 A2**
(43) Date of publication of application: **05.12.2012**
(21) Application number: 12161117.2
(22) Date of filing: 23.03.2012
(51) Int. Cl.: H04N 13/00

(54) **Apparatus and method for 3D image conversion and a storage medium thereof**

(30) Priority: 31.05.2011 KR 20110052284
(71) Applicant: Samsung Electronics Co., Ltd., Suwon-si, Gyeonggi-do, 443-742 (KR)
(72) Inventor: Kwon, Oh-yun, Seoul (KR); Heo, Hye-hyun, Gyeonggi-do (KR)
(74) Representative: Fearnside, Andrew Simon

(57) **Abstract**

An apparatus and method for three-dimensional (3D) image conversion and a storage medium thereof. The method implemented by a three-dimensional (3D) image conversion apparatus includes: receiving an input image including a plurality of frames; identifying a first frame selected among the plurality of frames; acquiring first depth information of a first object selected in the first frame; identifying a second frame selected among the plurality of frames; acquiring second depth information of a second object selected in the second frame; acquiring third depth information of a third object selected in a third frame, using at least one of depth information between the first depth information and the second depth information; generating fourth depth information based on the first depth information, the second depth information and the third depth information; and rendering the input image based on the fourth depth information.

## Description

### 1. Field

Apparatuses and methods consistent with the exemplary embodiments relate to an apparatus and method for three-dimensional (3D, e.g. stereoscopic) image conversion and a non-transitory computer-readable recorded medium thereof, and more particularly, to an apparatus and method for converting a two-dimensional (2D) image into a 3D image and a non-transitory computer-readable recorded thereof.

### 2. Description of the Related Art

A related art electronic apparatus capable of converting a 2D image into a 3D image generates a depth value, used for generating the 3D image from the 2D image, based on a general depth estimation theory or algorithm. The 3D image acquired by using the generated depth value not only has low quality since any intention to produce contents corresponding to the 2D image is not reflected but also does not make a user feel an enough 3D effect based on the intention to produce the contents corresponding to the 2D image.

### SUMMARY

Accordingly, one or more exemplary embodiments provide an apparatus and method capable of converting a 2D image into a 3D image having a high-quality 3D effect based on intention to produce contents corresponding to the 2D image, and a storage medium thereof.

According to the present invention there is provided an apparatus and method as set forth in the appended claims. Other features of the invention will be apparent from the dependent claims, and the description which follows.

The foregoing and/or other aspects may be achieved by providing a method implemented by a three-dimensional (3D) image conversion apparatus, the method including: receiving an input image including a plurality of frames; identifying a first frame selected among the plurality of frames; acquiring first depth information of a first object selected in the first frame; identifying a second frame selected among the plurality of frames; acquiring second depth information of a second object selected in the second frame; acquiring third depth information of a third object selected in a third frame, using the first depth information and the second depth information; generating fourth depth information based on the first depth information, the second depth information and the third depth information; and rendering the input image based on the fourth depth information.

The first object, the second object and the third object may be recognized as one object by a user within the plurality of frames.

The third frame may include a frame between the first frame and the second frame.

The third depth information may include a value between a value included in the first depth information and a value included in the second depth information.

The third depth information may include a value within a certain range from the value included in the first or the value included in the second depth information.

The third depth information may include a value calculated by a function having the value included in the first depth information or the value included in the second depth information as input.

The first frame may include a key frame.

The first frame may include a scene change frame.

The method may further include acquiring depth range information, wherein the first depth information includes a value between maximum and minimum values of the depth range information.

The identifying the first frame may include receiving a first user input through a first user interface (UI); and identifying the first frame according to the first user input.

The identifying the first object may include receiving a second user input through a second UI; and identifying the first object according to the second user input.

Another aspect may be achieved by providing a non-transitory computer-readable recorded medium encoded by a command executable by a computer, in which the command performs a method for rendering an input image when the command is executed by a processor, the method including: receiving an input image including a plurality of frames; identifying a first frame selected among the plurality of frames; acquiring first depth information of a first object selected in the first frame; identifying a second frame selected among the plurality of frames; acquiring second depth information of a second object selected in the second frame; acquiring third depth information of a third object selected in a third frame, using the first depth information and the second depth information; generating fourth depth information based on the first depth information, the second depth information and the third depth information; and rendering the input image based on the fourth depth information.

The first object, the second object and the third object may be recognized as one object by a user within the plurality of frames.

The third frame may include a frame between the first frame and the second frame.

The third depth information may include a value between the first depth information and the second depth information.

The third depth information may include a value within a certain range from the first or second depth information.

The third depth information may include a value calculated by a function having the first depth information or the second depth information as input.

The first frame may include a key frame.

The first frame may include a scene change frame.

The non-transitory computer-readable recorded medium may further include acquiring depth range information, wherein the first depth information includes a value between a maximum and minimum values of the depth range information.

The identifying the first frame may include: receiving a first user input through a first user interface (UI); and identifying the first frame according to the first user input.

The identifying the first object may include: receiving a second user input through a second UI; and identifying the first object according to the second user input.

Still another aspect may be achieved by providing a three-dimensional (3D) image conversion apparatus including: a first receiver which receives an input image including a plurality of frames; and an image converter which identifies a first frame selected among the plurality of frames and acquires first depth information of a first object selected in the first frame, identifies a second frame selected among the plurality of frames and acquires second depth information of a second object selected in the second frame, acquires third depth information of a third object selected in a third frame, using the first depth information and the second depth information, generates fourth depth information based on the first depth information, the second depth information and the third depth information, and renders the input image based on the fourth depth information.

The first object, the second object and the third object may be recognized as one object by a user within the plurality of frames.

The third frame may include a frame between the first frame and the second frame.

The third depth information may include a value between a value included in the first depth information and a value included in the second depth information.

The third depth information may include a value within a certain range from the value included in the first or the value included in the second depth information.

The third depth information may include a value calculated by a function having the value included in the first depth information or the value included in the second depth information as input.

The first frame may include a key frame.

The first frame may include a scene change frame.

The 3D-image conversion apparatus may further include a second receiver which receives depth setting information, wherein the first depth information includes a value between maximum and minimum values of the depth range information.

The 3D-image conversion apparatus may further include a user interface (UI generator) which generates a first UI to receive a first user input for identifying the first frame, wherein the image converter identifies the first frame according to the first user input using the first UI.

The UI generator may further generate a second UI for identifying the first object, wherein the image converter identifies the first object according to a second user input using the second UI.

Still another aspect may be achieved by providing a method implemented by an information processing apparatus, the method including: receiving an input image including a plurality of frames; generating and displaying a user interface (UI) for setting up depth information with regard to the input image; and processing depth setting information set up by a user's selection using the UI and transmitting the depth setting information to an external three-dimensional (3D) image conversion apparatus, wherein the depth setting information includes at least one of frame selection information for selecting at least one among the plurality of frames, object selection information for selecting at least one object in the selected frame, and depth-value range information to be applied to the selected object.

The UI may include a first user interface (UI) for selecting at least one frame among the plurality of frames; a second UI for selecting at least one object included the at least one frame; and a third UI for setting up a depth value range of the selected object.

The displaying the UI may include generating and displaying at least one among the first to third Uls on a frame corresponding to a preset condition among the plurality of frames.

The frame corresponding to the preset condition may include at least one between a key frame and a scene change frame.

Still another aspect may be achieved by providing an information processing apparatus including: a communication unit which communicates with an external three-dimensional (3D) image conversion apparatus; a receiver which receives an input image including a plurality of frames; and a user interface (UI) generator which generates a UI for setting up depth information with regard to the input image; a display unit; a user input unit; and a controller which processes depth setting information set up through the u ser input unit and controls the communication unit to transmit the depth setting information to the 3D-image conversion apparatus, the depth setting information including at least one of frame selection information for selecting at least one among the plurality of frames, object selection information for selecting at least one object in the selected frame, and depth-value range information to be applied to the selected object.

The UI may include a first user interface (UI) for selecting at least one frame among the plurality of frames; a second UI for selecting at least one object included the at least one frame; and a third UI for setting up a depth value range of the selected object.

The controller may control the UI generator and the display unit to generate and display at least one among the first to third UIs on a frame corresponding to a preset condition among the plurality of frames on the display unit.

The frame corresponding to the preset condition may include at least one between a key frame and a scene change frame.

Still another aspect may be achieved by providing a method implemented by a three-dimensional (3D) image conversion apparatus, the method including: receiving depth setting information about an input image including a plurality of frames from an external apparatus; generating depth information about the input image based on the received depth setting information; and rendering the input image based on the generated depth information, the depth setting information including at least one of frame selection information for selecting at least one among the plurality of frames, object selection information for selecting at least one object in the selected frame, and depth-value range information to be applied to the selected object.

The frame selection information may include information for indicating a frame corresponding to at least one between a key frame and a scene change frame among the plurality of frames.

The method may further include generating and displaying a user interface (UI) for receiving input of a user's selection based on the depth setting information.

The UI may include a first user interface (UI) for receiving input of a user's selection with regard to a frame indicated by the frame selection information among the plurality of frames; a second UI for receiving input of a user's selection with regard to at least one object indicated by the object selection information; and a third UI for displaying the depth-value range information and receiving input of a user's selection.

The generating the depth information may include generating depth information according to a frame and object selected by a user's selection, and a depth value having a certain level selected with regard to the object.

Still another aspect may be achieved by providing a three-dimensional (3D) image conversion apparatus including: a receiver which receives depth setting information about an input image including a plurality of frames from an external apparatus; an image converter which generates depth information about the input image based on the received depth setting information, and renders the input image based on the generated depth information, the depth setting information including at least one of frame selection information for selecting at least one among the plurality of frames, object selection information for selecting at least one object in the selected frame, and depth-value range information to be applied to the selected object.

The frame selection information may indicate at least one between a key frame and a scene change frame among the plurality of frames.

The 3D-image conversion apparatus may further include a display unit; and a user interface (UI) generator which generates a UI for receiving input of a user's selection based on the depth setting information.

The UI may include a first user interface (UI) for receiving input of a user's selection with regard to a frame indicated by the frame selection information among the plurality of frames; a second UI for receiving input of a user's selection with regard to at least one object indicated by the object selection information; and a third UI for displaying the depth-value range information and receiving input of a user's selection.

The image converter may generate depth information according to a frame and object selected by a user's selection, and a depth value having a certain level selected with regard to the object.

Still another aspect may be achieved by providing a non-transitory computer-readable recording medium having recording hereon a program executable by a computer performing the foregoing method.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 is a schematic view showing a system including an apparatus for 3D image conversion according to an exemplary embodiment;
FIG. 2 is a control block diagram of the apparatus for 3D image conversion according to an exemplary embodiment;
FIG. 3 is a control block diagram of an information processing apparatus according to an exemplary embodiment;
FIGs. 4 to 6 show exemplary operations of an image converter in the apparatus for 3D image conversion according to an exemplary embodiment;
FIG. 7 is a flowchart showing a method implemented by the information processing apparatus according to an exemplary embodiment;
FIG. 8 is a flowchart showing a method implemented by the apparatus for 3D image conversion according to an exemplary embodiment; and
FIGs. 9 and 10 are flowcharts showing a method implemented by an apparatus for 3D image conversion according to another exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

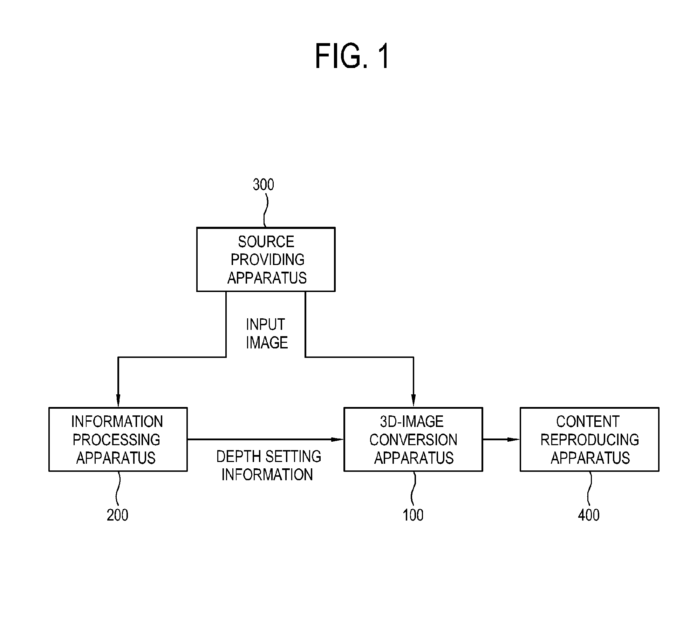

FIG. 1 is a schematic view showing a system including an apparatus for 3D image conversion according to an exemplary embodiment.

A 3D-image conversion apparatus 100 may receive a monocular input image from a source providing apparatus 300 and convert the input image into a binocular image. The monocular image involves a 2D image, and the two terms mixed with each other may be used.

At this time, the 3D-image conversion apparatus 100 receives depth setting information, used in converting the input image into the 3D image, from an external information processing apparatus 200, generates depth information about the input image based on the received depth setting information in response to a user's selection, and converts the input image into the 3D image based on the generated depth information. The input image includes a plurality of frames, and depth setting information received from the information processing apparatus 300 includes frame selection information for selecting at least one frame among the plurality of frames; object selection information for selecting at least one object among the frames selected based on the frame selection information; and depth-value range information of the object selected based on the object selection information. The depth setting information contains information about a frame and object to which a depth value is assigned, and information about a depth-value range so that intention to produce contents corresponding to the input image can be reflected. Thus, the 3D-image conversion apparatus 100 can convert an input image into a 3D image using the depth information generated based on the depth setting information, and a user who is viewing the 3D image can feel an enough 3D effect depending on the intention to produce contents corresponding to the input image.

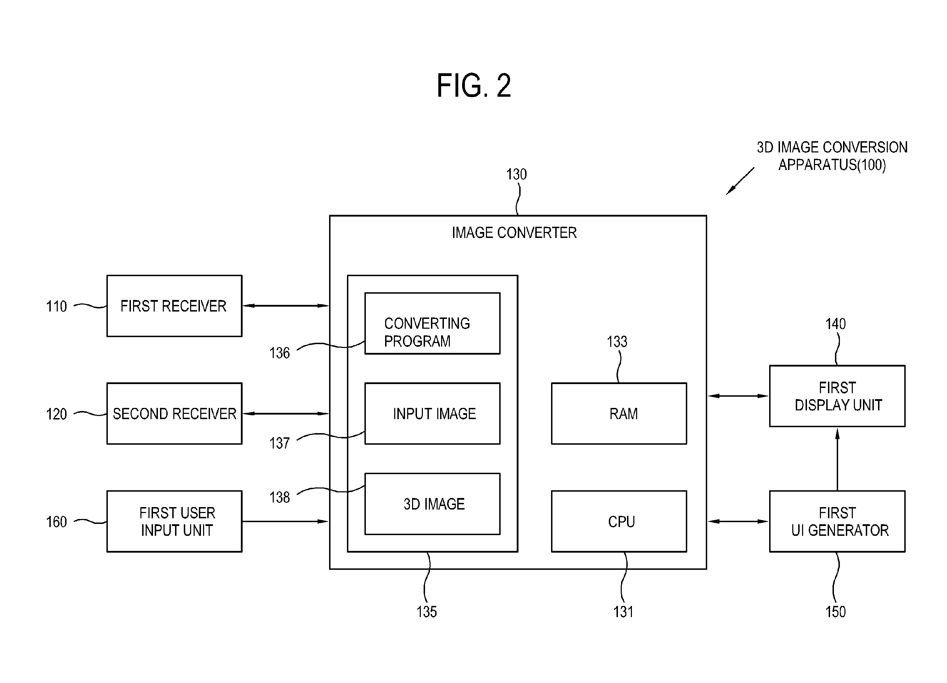

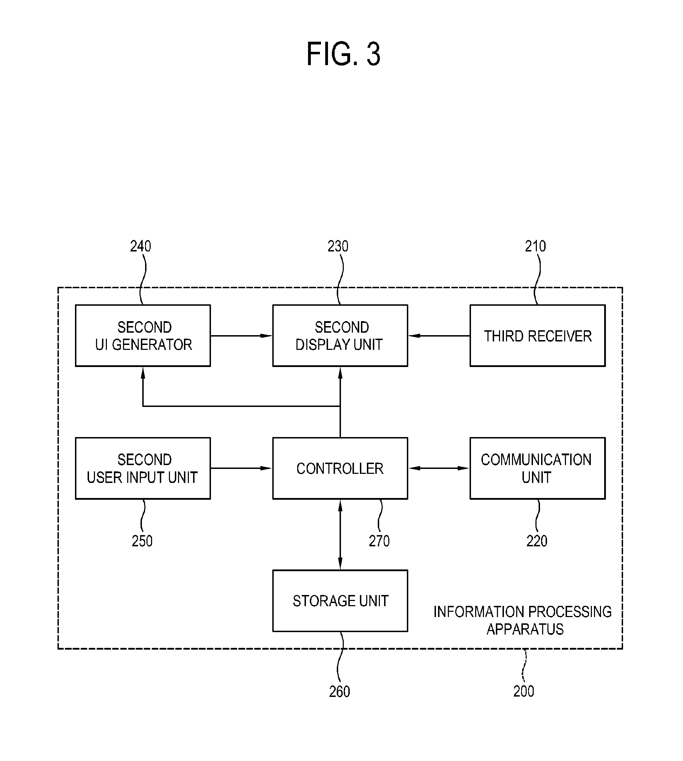

Also, the information processing apparatus 200 receives the same input image as that provided to the 3D-image conversion apparatus 100 from the source providing apparatus 300, and generates and transmits depth setting information about the input image to the 3D-image conversion apparatus 100. The depth setting information generated by the information processing apparatus 200 serves as a kind of guideline about the depth information that can be generated for the input image in the 3D-image conversion apparatus 100. Thus, the 3D-image conversion apparatus 100 generates depth information about the input image provided from the source providing apparatus 300 based on the depth setting information received from the information processing apparatus 200, and converts the input image into a 3D image based on the generated depth information. The 3D-image conversion apparatus 100 includes an electronic apparatus capable of displaying the converted 3D image as a stereoscopic image. Alternatively, the 3D-image conversion apparatus 100 may transmit the converted 3D image to a content reproducing apparatus 400. The content reproducing apparatus 400 has a function of displaying a 3D image received from the 3D-image conversion apparatus 100 as a stereoscopic image. Below, the 3D-image conversion apparatus 100 and the information processing apparatus 200 will be described in detail with reference to FIGs. 2 and 3.

As shown in FIG. 2, the 3D-image conversion apparatus 100 according to an exemplary embodiment includes a first receiver 110, a second receiver 120, an image converter 130, a first display unit 140, a first UI generator 150 and a first user input unit 160. The 3D-image conversion apparatus 100 may include any type of electronic apparatus capable of converting a monocular input image into a binocular image. Also, the 3D-image conversion apparatus 100 may include any electronic apparatus provided with a program for converting a monocular image into a binocular image. Such an electronic apparatus may include a display apparatus, for example, a personal computer (PC), or the like.

Through the first receiver 110, the 3D-image conversion apparatus 100 may receive an input image. The first receiver 110 may receive an input image from the source providing apparatus 300 through a network (not shown). Thus, the first receiver 110 may include a communication module capable of communicating with the network. For example, the source providing apparatus 300 may be a network server that can store an input image and transmit the input image to the 3D-image conversion apparatus 100 as requested by the 3D-image conversion apparatus 100. Alternatively, the source providing apparatus 300 may include an external storage medium provided with a storage unit such as a hard disk drive, a flash memory, etc. where the input image is stored. Thus, the source providing apparatus 300 may be connected as a local apparatus to the 3D-image conversion apparatus 100 via the first receiver 110, and the source providing apparatus 300 may transmit the input image to the 3D-image conversion apparatus 100 as requested by the 3D-image conversion apparatus 100. For example, the first receiver 110 may include a module required for achieving local connection between the 3D-image conversion apparatus 100 and the source providing apparatus 300, and the module may include a universal serial bus (USB), etc.

Through the second receiver 120, the 3D-image conversion apparatus 100 may receive the depth setting information from the external information processing apparatus 200. Through the second receiver 120, the 3D-image conversion apparatus 100 and the information processing apparatus 200 may be connected via a network or locally connected. The input image received through the first receiver 110 includes a plurality of frames, and the depth setting information received from the information processing apparatus 200 includes frame selection information for selecting at least one frame among the plurality of frames; object selection information for selecting at least one object among the frames selected based on the frame selection information; and depth-value range information (or depth range information) of the object selected based on the object selection information. The depth setting information may be employed as a kind of guideline about the depth information that can be generated for the input image in the 3D-image conversion apparatus 100. Thus, the frame selection information contained in the depth setting information is information that indicates at least one frame, to which a depth value is applied, among the plurality of frames included in the input image. The 3D-image conversion apparatus 100 can allocate the depth value to only the frame selected from the at least one frame indicated by the frame selection information according to a user's selection using the first user input unit 160 to be described later. Likewise, the object selection information is also information that indicates at least one object, to which a depth value is applied, among at least one object contained in the at least one indicated frame. The 3D-image conversion apparatus 100 can allocate the depth value to only the object selected from the at least one object indicated by the object selection information according to a user's selection using the user input unit 160 to be described later. The depth-value range information can be applied to at least one object indicated by the object selection information, which has the maximum applicable depth value and minimum applicable depth value. The 3D-image conversion apparatus 100 may allocate a certain depth value selected between the maximum depth value and the minimum depth value defined by the depth-value range information according to a user's selection using the first user input unit 160 to be described later.

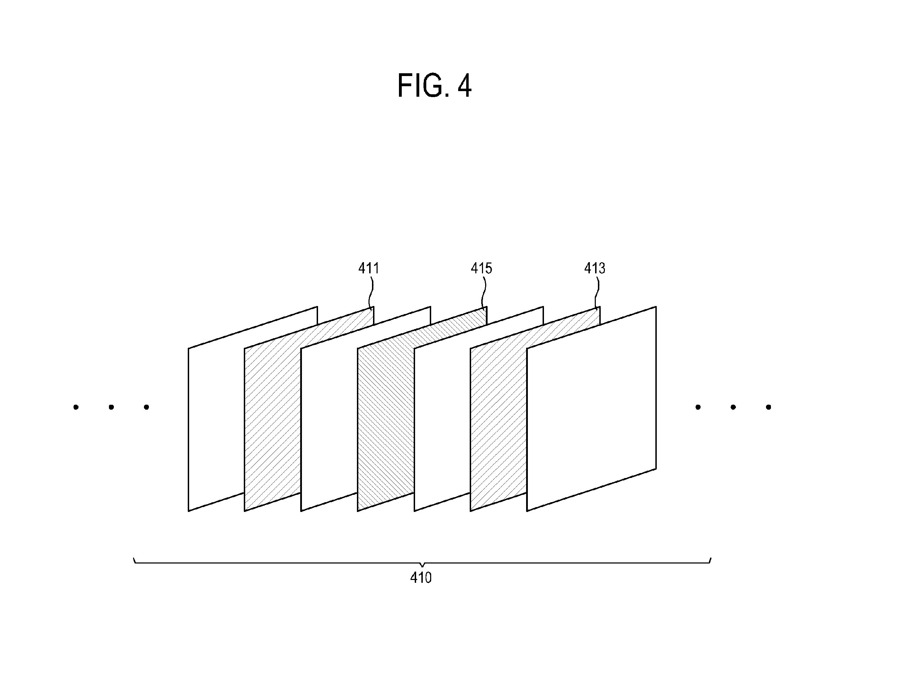

The image converter 130 converts an input image received through the first receiver 110 into a 3D image based on the depth setting information received through the second receiver 120. The image converter 130 may include a central processing unit (CPU) 131, a random access memory (RAM) 133, and a storage unit 135. The storage unit 135 may store a converting program 136 for converting a monocular image into a binocular image, a monocular image (or an input image) 137 to be converted, and a binocular image (or a 3D image) 138 completely converted from the monocular image. The storage unit 135 may be achieved by a hard disk drive, a flash memory, or the like non-volatile memory. The RAM 133 is loaded with at least a part of the converting program 136 when the image converter 130 operates, the CPU 131 executes the converting program 136 loaded into the RAM 133. The converting program 136 contains instructions executable by the CPU 131. The storage unit 135 is an example of a non-transitory computer-readable recorded medium. The operation of the image converter 130 will be described in more detail with reference to FIGs. 4 to 6.

The first display unit 140 displays first to third user interfaces (UI) generated by the first UI generator 150 to be described later. Also, the input image being converted by the image converter 130 may be displayed together with the first to third user interfaces. Further, a 3D image completely converted by the image converter 130 may be displayed. Without any limit, the first display unit 140 may be achieved by various display types such as liquid crystal, plasma, a light-emitting diode, an organic light-emitting diode, a surface-conduction electron-emitter, a carbon nano-tube, a nano-crystal, etc.

The first UI generator 150 may generate the first UI for receiving a first user input to identify a first frame among the plurality of frames in the input image, and the second UI for receiving a second user input to identify a first object in the first frame. Also, the first UI generator 150 may generate a third UI for displaying a depth value range of the first object and receiving a user's selection about one depth value within the displayed depth value range. The first UI, the second UI and the third UI may be achieved in the form of a graphic user interface (GUI). The first to third Uls may be generated while converting an input image into a 3D image, so that the UI generator 150 can perform its own function under control of the CPU 131 of the image converter 130.

The first user input unit 160 is a user interface for receiving a user's input, which receives a user's selection related to the function or operation of the 3D-image conversion apparatus 100. The user input unit 160 may be provided with at least one key button, and may be achieved by a control or touch panel provided in the 3D-image conversion apparatus 100. Also, the user input unit 160 may be achieved in the form of a remote controller, a keyboard, a mouse, etc., which is connected to the 3D-image conversion apparatus 100 through a wire or wirelessly.

As shown in FIG. 3, the information processing apparatus 200 includes a third receiver 210, a communication unit 220, a second display unit 230, a second UI generator 240, a second user input unit 250, a storage unit 260, and a controller 270 controlling them.

The information processing apparatus 200 generates depth setting information about an input image and transmits the depth setting information to the 3D-image conversion apparatus 100. Thus, the information processing apparatus 200 includes any electronic apparatus capable of generating the depth setting information with regard to the input image. For example, the information processing apparatus 200 may include a display apparatus, a PC, etc.

The third receiver 210 may receive an input image including a plurality of frames from the source providing apparatus 300. The third receiver 210 may be achieved by the same or similar connection method as that between the first receiver 110 and the source providing apparatus 300.

The communication unit 220 may send the 3D-image conversion apparatus 100 the depth setting information generated with regard to the input image under the control of the controller 270. Through the communication unit 220, the 3D-image conversion apparatus 100 and the information processing apparatus 200 may be connected through a usually known network or by an ordinarily known local method.

The second display unit 230 displays an input image including a plurality of frames received from the source providing apparatus 300, and simultaneously displays a UI generated by the second UI generator 240 (to be described later) under control of the controller 270. The information processing apparatus 200 is an apparatus capable of generating depth setting information used for converting a 2D image into a 3D image, and the depth setting information is depth setting information to which a user's selection is reflected. At this time, the UI for the depth setting may be displayed together with the display of the input image. The second display unit 230 may be achieved by the same or similar method as the first display unit 140.

The second UI generator 240 generates a first UI for selecting at least one frame among the plurality of frames; a second UI for selecting at least one object included in the at least one frame; and a third UI for setting a depth value range of the selected object, and displays them on the second display unit 230. Under the control of the controller 270, the second UI generator 240 generates at least one among the first to third Uls on the frame corresponding to a preset condition among the plurality of frames and displays it on the second display unit 230. Here, the frame corresponding to the preset condition among the plurality of frames includes at least one between a key frame and a scene change frame. The key frame may include a frame, in which an important object appears for the first time, among the plurality of frames. Also, the key frame may include a frame, in which motion of an object is great, among the plurality of frames.

The second user input unit 250 is a user interface for receiving a user's input, which receives a user's selection related to the function or operation of the information processing apparatus 200. The second user input unit 250 may be provided with at least one key button, and may be achieved by a control or touch panel provided in the information processing apparatus 200. Also, the user input unit 160 may be achieved in the form of a remote controller, a keyboard, a mouse, etc., which is connected to the information processing apparatus 200 through a wire or wirelessly.

The storage unit 260 stores the depth setting information about the input image to which a user's selection is reflected through the first to third Uls under control of the controller 270.

The controller 270 controls all the above described elements. Under the control of the controller 270, if the first UI is generated and displayed on the frame corresponding to a preset condition in the input image including the plurality of frames, a user may select the frame corresponding to the preset condition through the first UI. This shows a user's intention to set up depth information with regard to the selected frame. When the frame is selected, the second UI for selecting an object and the third UI for receiving settings of the depth value range about the object are generated and displayed in sequence, and the object and depth value range desired by a user are input by a user. Like this, the information processing apparatus 200 can generate the depth setting information used for converting a 2D image into a 3D image. The depth setting information reflects intention to produce a 2D image and thus the quality thereof is better than that of the depth information estimated by a general depth estimation algorithm or theory. Further, the reflection of the production intention enhances a 3D effect felt by a user.

The information processing apparatus 200 transmits the depth setting information generated with regard to the input image to the 3D-image conversion apparatus 100.

Below, the operation of the image converter 130 in the 3D-image conversion apparatus 100 according to an exemplary embodiment will be described with reference to FIGs. 4 to 6.

### A. First exemplary embodiment

As shown in FIG. 4, if an input image containing a plurality of frames 410 is received through the first receiver 110 from the source providing apparatus 300 and depth setting information about the input image is received through the second receiver 120 from the information processing apparatus 200, the image converter 130 extracts frame selection information from the depth setting information, identifies at least one frame 411, 413 indicated by the frame selection information among the plurality of frames 410 based on the frame selection information, and controls the first UI generator 150 to generate the first UI for receiving a user's selection about the at least one frame 411, 413.

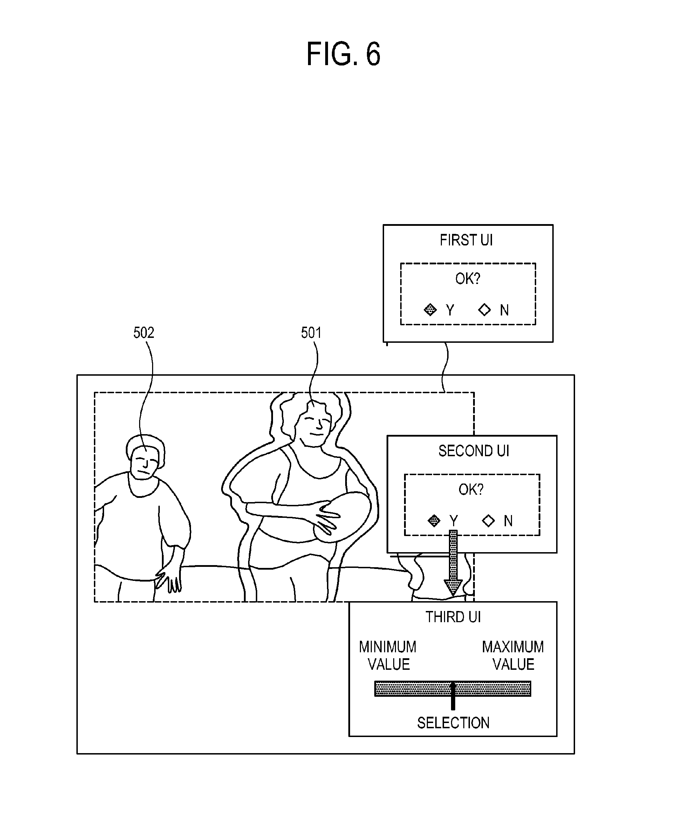

Referring to FIG. 6, if the frame corresponding to the frame selection information is displayed on the first display unit 140, the first UI is displayed for receiving a user's selection while informing that the corresponding frame is the very same frame indicated by the frame selection information. In FIG. 6, all the frames are identified and at the same time the first UI is generated and displayed, but not limited thereto. If the user's selection using the user input unit 160 is input through the first UI, the first frame 411 and the second frame 413 are selected. Here, the first frame 411 and the second frame 413 are selected based on the frame selection information, which correspond to the key frame or the scene change frame. According to an exemplary embodiment, the key frame may include a frame, in which an important object appears for the first time, among the plurality of frames. Also, the key frame may include a frame, in which motion of an object is great, among the plurality of frames.

The image converter 130 extracts object selection information from the depth setting information, identifies at least one object indicated by the object selection information in the selected first and second frames 411 and 413 based on the object selection information, and controls the first UI generator 150 to generate the second UI for receiving a user's selection with regard to the at least one object. Referring back to FIG. 6, the selected frame contains two objects 501 and 502, but the object indicated by the object selection information is the object 501. At this time, the second UI is generated and displayed for informing a user of the object and allowing a user's selection. Thus, if a user's selection about the first object in the first frame 411 and a user's selection about the second object in the second frame 413 are input using the first user input unit 160 through the second UI, the first object and the second object to which the depth values are finally assigned are selected. The image converter 130 may control the first UI generator 150 to generate the third UI for receiving a user's selection by extracting depth-value range information from the depth setting information and displaying each depth-value range information about the first object and the second object based on the extracted depth-value range information. The third UI displays the minimum depth value to the maximum depth value that can be assigned to the first object based on the extracted depth value range information, and allows a user to select one value between the minimum depth value and the maximum depth value as first depth information. Referring back to FIG. 6, if the object is selected through the second UI, the third UI is generated and displayed for selecting the depth value about the selected object. That is, the minimum to maximum values of the depth values that can be assigned to the object selected based on the depth-value range information are displayed, and a user can select one depth value between the minimum and maximum values. This is equally applied to the second object so that a user can select the second depth information.

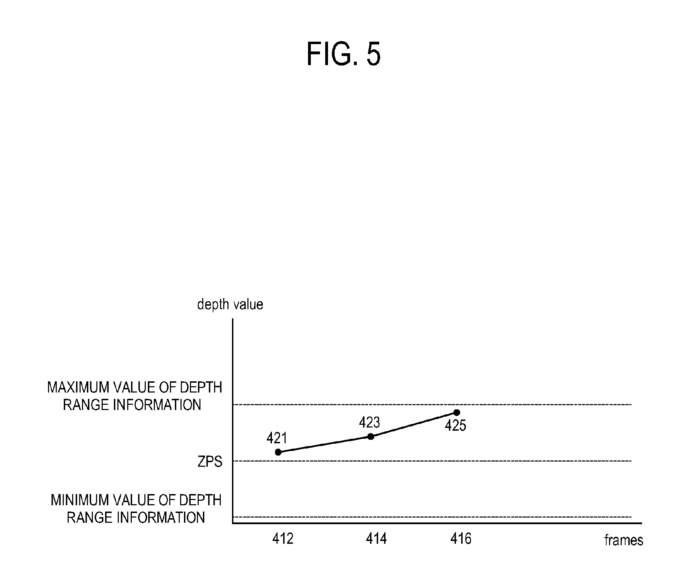

Referring to FIG. 5, the y-axis shows the minimum to maximum values of the depth value range contained in the depth setting information received through the second receiver 120, "ZPS" shows a point where the depth value is zero, and the x-axis shows a frame. Regarding the first object of the first frame 412, a value input between the minimum to maximum values of the depth value range according to a user's selection through the first user input unit 160 is selected as the first depth information 421. Regarding the second object of the second frame 416, a value input between the minimum to maximum values of the depth value range according to a user's selection through the first user input unit 160 is selected as the second depth information 425.

Thus, the image converter 130 generates depth information about the input image based on the depth setting information, used as the guideline, received through the first user input unit 160, and renders the input image based on the generated depth information, thereby converting the input image into the 3D image.

### B. Second exemplary embodiment.

In the first exemplary embodiment, the information processing apparatus 200 generates the depth information about only the key frame or scene change frame based on the depth setting information and uses it in the rendering. However, the second exemplary embodiment shows an example of the 3D-image conversion apparatus 100 in which the depth information is generated by performing tracking with regard to frames besides the key frame or scene change frame and used in the rendering. Therefore, only different points from the first exemplary embodiment will be described below.

The 3D-image conversion apparatus 100 identifies the first frame and the second frame based on the depth setting information received from the information processing apparatus 200, and acquires the first and second depth information by receiving a user's selection. Here, the first and second depth information is acquired by the same method as described in the first exemplary embodiment. The image converter 130 may acquire third depth information of a third object selected in a third frame based on at least one between the first depth information and the second depth information. Referring to FIG. 4, the third frame 415 follows the first frame 411 and precedes the second frame 413, but not limited thereto. Alternatively, the third frame may include at least one frame following the first frame 411 or at least one frame following and preceding the second frame 413. The image converter 130 selects the third frame 415 and selects at least one third object contained in the third frame. Therefore, the first object, the second object and the third object may be recognized as the same object by a viewer. The image converter 130 uses at least one between the first depth information and the second depth information when setting up the third depth information about the third object. According to an exemplary embodiment, the third depth information about the third object may contain a value between the first depth information and the second depth information. Referring to FIG. 5, one depth value 423 between the first depth information 421 and the second depth information 425 may be generated as the third depth information with respect to the third object in the third frame 414. According to another exemplary embodiment, the third depth information may include a value within a certain range from the first depth information or a value within a certain range from the second depth information. According to still another exemplary embodiment, the third depth information may include a value calculated by a function having the first depth information or the second depth information as input. Thus, the third object of the third frame, i.e., the frames excluding the key frame or the scene change frame may be generated from the first depth information and the second depth information, and therefore the depth information of the third frame can be generated by tracking the key frame or the scene change frame.

The image converter 130 generates fourth depth information based on the first depth information, the second depth information and the third depth information. The fourth depth information contains depth information about excluded object, i.e., not indicated by the object selection information on the frame indicated by the frame selection information based on the depth setting information. For example, the fourth depth information includes depth information about the object that does not have the first or second depth information in the first or second frame. Thus, the fourth depth information includes depth information about the object having no third depth information in the third frame. In conclusion, the fourth depth information includes not only the first, second and third information but also the depth information about the object of which the depth value is not set up based on the depth setting information. The image converter 130 generates depth values increased or decreased within a predetermined range from the first, second and third depth information as the depth values for the objects of which the depth values are not set up based on the depth setting information.

The image converter 130 may generate a 3D image by rendering the input image based on the generated fourth depth information.

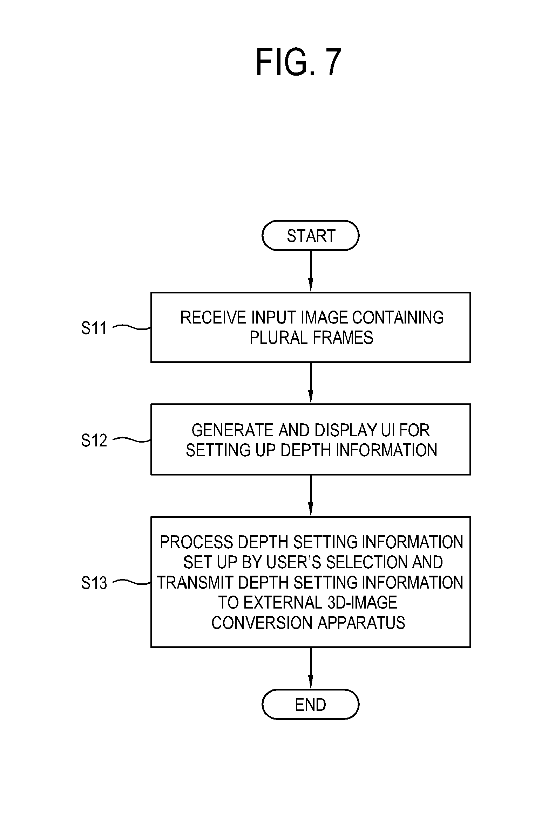

FIG. 7 is a flowchart showing a method implemented by the information processing apparatus 200 according to an exemplary embodiment.

As shown therein, the information processing apparatus 200 receives an input image containing a plurality of frames from the source providing apparatus 300 (S11), and generates and displays the UI for setting up the depth information about the input image (S12). The information processing apparatus 200 processes the depth setting information set up by a user's selection and transmits the depth setting information to the external 3D-image conversion apparatus 100 (S13).

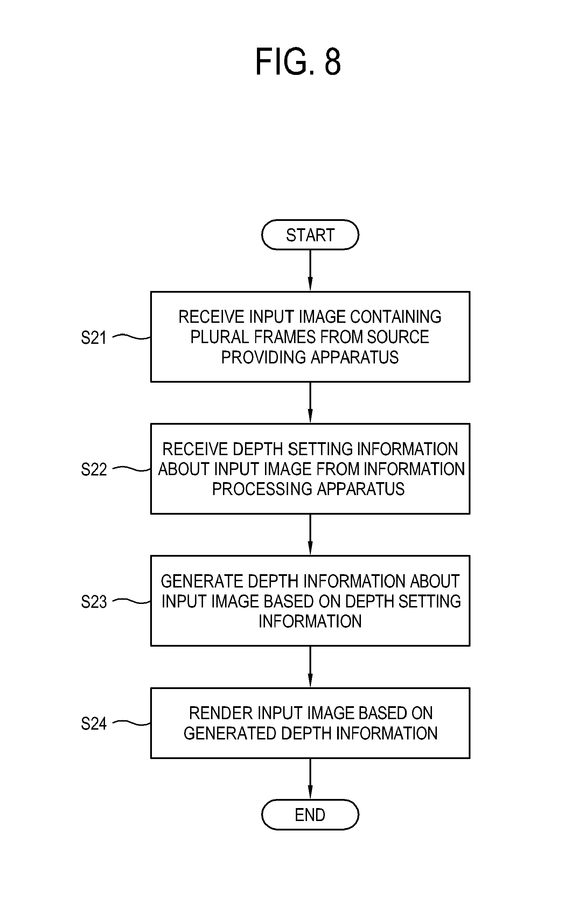

FIG. 8 is a flowchart showing a method implemented by the 3D-image conversion apparatus 100 according to an exemplary embodiment.

The 3D-image conversion apparatus 100 receives an input image containing a plurality of frames from the source providing apparatus 300 (S21), and receives the depth setting information about the input image from the information processing apparatus 200 (S22). The 3D-image conversion apparatus 100 generates depth information about the input image based on the received depth setting information (S23), and generates the 3D image by rendering the input image based on the generated depth information (S24).

The above method may further include displaying the generated 3D image on the 3D-image conversion apparatus 100, or transmitting the generated 3D image to an external content reproducing apparatus 400

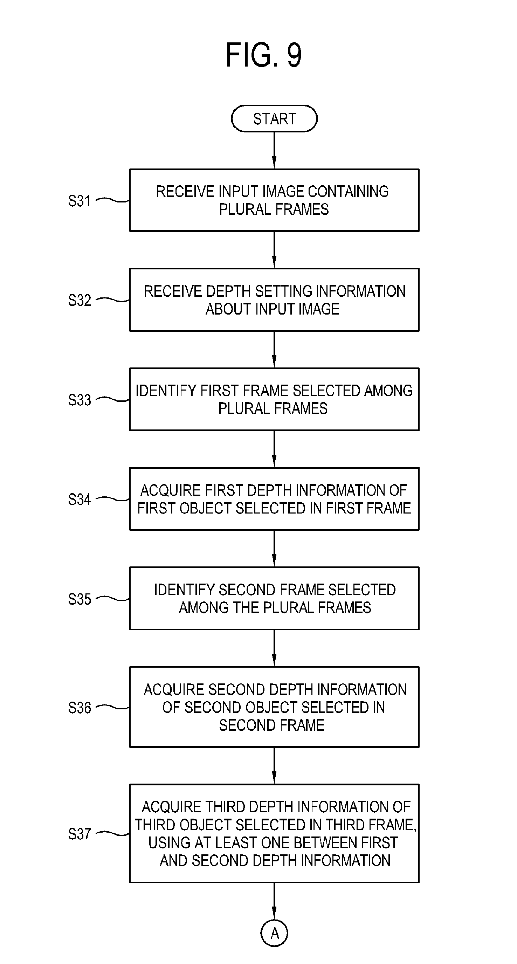

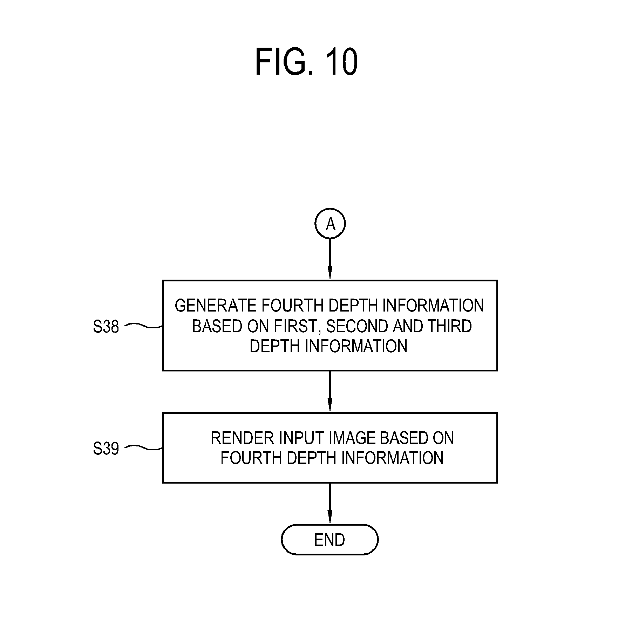

FIGs. 9 and 10 are flowcharts showing a method implemented by an apparatus for 3D image conversion according to another exemplary embodiment.

The 3D-image conversion apparatus 100 receives an input image containing a plurality of frames from the source providing apparatus 300 (S31), and receives the depth setting information about the input image from the information processing apparatus 200 (S32). The first frame selected among the plurality of frames is identified (S33). The identification of the first frame includes generating the first UI for receiving a user's input with regard to a frame indicated by the frame selection information among the plurality of frames based on the frame selection information contained in the depth setting information, receiving a fist user input through the first UI, and identifying the first frame according to the first user input. The first depth information of the first object selected in the first frame is acquired (S34). At this time, the acquisition of the first depth information includes generating the second UI for receiving a user's input with regard to an object indicated by the object selection information among the objects contained in the first frame based on the object selection information contained in the depth range information, receiving a second user input through the second UI, and identifying the first object according to the second user input. Further, the third UI is generated for displaying the depth-value range information about the first object based on the depth-value range information included in the depth range information, a third user input for setting the depth value is received through the third UI, and the first depth information is acquired according to the third user input.

The second frame selected among the plurality of frames is identified (S35), and the second depth information of the second object selected in the second frame is acquired (S36). The second depth information is acquired by the same or similar method as the first depth information.

Using at least one between the first depth information and the second depth information, the third depth information of the third object selected in the third frame is acquired (S37). The third frame includes at least one frame located following the first frame among the plurality of frames, or at least one frame located following and preceding the second frame. Also, the first to third objects are recognized as the same object by a user within the plurality of frames. The third depth information may be acquired based on at least one between the first depth information and the second depth information.

The fourth depth information is generated based on the acquired first to third depth information (S38).

Using the generated fourth depth information, the input image is rendered to generate the 3D image (S39).

Further, the generated 3D image may be displayed on the 3D-image conversion apparatus 100.

Also, the generated 3D image may be transmitted to an external content reproducing apparatus 400.

The method implemented by the 3D-image conversion apparatus according to an exemplary embodiment may be achieved in the form of a program command executable by various computers and recorded in a non-transitory computer-readable recorded medium. The non-transitory computer-readable recorded medium may include the single or combination of a program command, a data file, a data structure, etc. The program command recorded in the non-transitory computer-readable recorded medium may be specially designed and configured for the present exemplary embodiment, or publicly known and usable by a person having a skill in the art of computer software. For example, the non-transitory computer-readable recorded medium includes magnetic media such as a hard disk, a floppy disk and a magnetic tape; optical media such as a compact-disc read only memory (CD-ROM) and a digital versatile disc (DVD); magnet-optical media such as a floptical disk; and a hardware device specially configured to store and execute the program command, such as a ROM, a random access memory (RAM), a flash memory, etc. For example, the program command includes not only a machine code generated by a compiler but also a high-level language code executable by a computer using an interpreter or the like. The hardware device may be configured to operate as one or more software modules for implementing the method according to an exemplary embodiment, and vice versa.

As described above, there are provided an apparatus and method capable of converting a 2D image into a 3D image having a high-quality 3D effect based on intention to produce contents corresponding to the 2D image, and a storage medium thereof.

Although a few exemplary embodiments have been shown and described, it will be appreciated by those skilled in the art that changes may be made in these exemplary embodiments without departing from the principles of the inventive concept, the scope of which is defined in the appended claims and their equivalents.

## Claims

1. A method implemented by a three-dimensional (3D) image conversion apparatus, the method comprising:
receiving an input image comprising a plurality of frames;
identifying a first frame selected among the plurality of frames;
acquiring first depth information of a first object selected in the first frame;
identifying a second frame selected among the plurality of frames;
acquiring second depth information of a second object selected in the second frame;
acquiring third depth information of a third object selected in a third frame by using the first depth information and the second depth information;
generating fourth depth information based on the first depth information, the second depth information and the third depth information; and
rendering the input image based on the fourth depth information.

2. The method according to claim 1, wherein the first object, the second object and the third object are recognized as one object by a user within the plurality of frames.

3. The method according to claim 1, wherein the third frame comprises a frame between the first frame and the second frame.

4. The method according to claim 1, wherein the first depth information comprises a first value, the second depth information comprises a second value and the third depth information comprises a third value between the first value and the second value.

5. The method according to claim 1, wherein the third depth information comprises a value within a certain range from a value comprised in the first depth information or a value comprised in the second depth information.

6. The method according to claim 1, wherein the third depth information comprises a value calculated by a function having a value comprised in the first depth information or a value comprised in the second depth information as input.

7. The method according to claim 1, wherein the first frame comprises at least one of a key frame and a scene change frame.

8. The method according to claim 1, further comprising acquiring depth range information,
wherein the first depth information comprises a value between a maximum value of depth range information and a minimum value of the depth range information.

9. The method according to claim 1, wherein the identifying the first frame comprises:
receiving a first user input through a first user interface (UI); and
identifying the first frame according to the first user input.

10. The method according to claim 1, wherein the identifying the first object comprises:
receiving a second user input through a second UI; and
identifying the first object according to the second user input.

11. A three-dimensional (3D) image conversion apparatus comprising:
a first receiver which receives an input image comprising a plurality of frames; and
an image converter which identifies a first frame selected among the plurality of frames and acquires first depth information of a first object selected in the first frame, identifies a second frame selected among the plurality of frames and acquires second depth information of a second object selected in the second frame, acquires third depth information of a third object selected in a third frame by using the first depth information and the second depth information, generates fourth depth information based on the first depth information, the second depth information and the third depth information, and renders the input image based on the fourth depth information.

12. The 3D-image conversion apparatus according to claim 11, wherein the first object, the second object and the third object are recognized as one object by a user within the plurality of frames.

13. The 3D-image conversion apparatus according to claim 11, wherein the third frame comprises a frame between the first frame and the second frame.

14. The 3D-image conversion apparatus according to claim 11, wherein the first depth information comprises a first value, the second depth information comprises a second value and the third depth information comprises a third value between the first and second values,
wherein the third depth information comprises a value within a certain range from a value comprised in the first depth information or a value comprised in the second depth information, and
wherein the third depth information comprises a value calculated by a function having a value comprised in the first depth information or a value comprised in the second depth information as input.

15. The 3D-image conversion apparatus according to claim 11, further comprising a second receiver which receives depth setting information,
wherein the first depth information comprises a value between a maximum value of the depth range information and a minimum value of the depth range information.
